Europäisches Patentamt

European Patent Office

Office européen des brevets

(19)

(11) Veröffentlichungsnummer: 0 326 994
A1

(12) EUROPÄISCHE PATENTANMELDUNG

(21) Anmeldenummer: 89101561.2

(51) Int. Cl.⁴: B23K 26/00

(22) Anmeldetag: 30.01.89

(30) Priorität: 03.02.88 DE 3803071

(43) Veröffentlichungstag der Anmeldung:
09.08.89 Patentblatt 89/32

(84) Benannte Vertragsstaaten:
AT BE CH DE ES FR GB GR IT LI LU NL SE

(71) Anmelder: Thyssen Industrie AG
Am Thyssenhaus 1
D-4300 Essen 1(DE)

(72) Erfinder: Biehler, Hubert
Am Ruhrstein 37 a
D-4300 Essen-Bredeney(DE)
Erfinder: Frings, Adam, Dipl.-Ing.
Kersthover Ring 88
D-4300 Essen(DE)
Erfinder: Prange, Wilfried, Dipl.-Ing.
Oleanderweg 20
D-4220 Dinslaken(DE)

(74) Vertreter: Eberhard, Friedrich, Dr. et al
Am Thyssenhaus 1
D-4300 Essen 1(DE)

(54) Verfahren zum Stumpfschweissen von Dünnblechen, insbesondere aus Stahl, mittels eines energiereichen Laserstrahls und Vorrichtungen zu dessen Durchführung.

(57) Ebene sowie durch Tiefziehen verformte Dünnbleche werden bei der Herstellung von Kraftfahrzeugkarosserien und von sonstigen Fahrzeug-Bauteilen gebraucht. Das Zusammenfügen zweier Bleche durch Laserschweißung an ihren Kanten stellt hohe Anforderungen an die Form- und Positioniergenauigkeit der zu verschweißenden Bleche und an die Führungsgenauigkeit des Lasers. Zunächst werden die beiden zu verschweißenden Bleche kantenfluchtend fixiert verspannt und mit einem Abstand zwischen den beiden einander gegenüberstehenden, zu verschweißenden Kanten (9,10) positioniert. Dann beschneiden ein bahngeführter Laserkopf (13) oder zwei gemeinsam bahngeführte Laserköpfe die beiden Blechkanten (9,10). Die beiden laserbeschnittenen Blechkanten werden durch Verschieben mindestens eines der fixiert verspannten Bleche auf berührenden Stoß zusammengefahren; dann verschweißt ein durch die gleiche Bahnführung gesteuerter Laserkopf (9) die beiden Blechkanten (9,10) miteinander. Die Schweißvorrichtung für tiefgezogene Preßteile hat zwei Schlitten (2,3), an deren Auflagen (4,5) auswechselbare Konturenbetten (11,12) angeordnet sind, deren Spannfläche mit der Soll-Raumform der zu verschweißenden Preßteile (6,7) übereinstimmt.

FIG.3

### Verfahren zum Stumpfschweißen von Dünnblechen, insbesondere aus Stahl, mittels eines energiereichen Laserstrahls und Vorrichtungen zu dessen Durchführung

Die Erfindung bezieht sich auf ein Verfahren zum Stumpfschweißen von Dünnblechen, insbesondere aus Stahl, mittels eines energiereichen Laserstrahls, vornehmlich auch zum Stumpfschweißen von tiefgezogenen Preßteilen für Karosseriezwecke, sowie auf Vorrichtungen zu dessen Durchführung.

Das Laserschweißen stellt sehr hohe Anforderungen an die Form- und Positioniergenauigkeit der zu verschweißenden Bleche und an die Führungsgenauigkeit des Lasers, der die Verschweißung vornimmt. Bei den meisten Anwendungsfällen für das Laserschweißen werden Nachführgenauigkeiten von ± 0,01 mm für den Laserkopf gefordert. Schweißspalte zwischen den auf Stumpfstoß zusammengeführten Blechen sollen nicht mehr als 10% der Materialdicke ausmachen. Bei der an sich günstigsten Nahtform für das Laserschweißen, dem Stumpfstoß (I-Naht),sollen die Schweißspalte höchstens 0,15 mm betragen (VDI-Z, Band 129 (1987) Nr. 6, Seite 18,19). Bei Dünnblechen, deren Dicke etwa im Bereich von 0,5 mm bis 1,5 mn liegt bei Fahrzeugkarosserieblechen aber auch bis 2,5 mm betragen kann, ist ein ausreichend kleiner Fügespalt schwierig zu verwirklichen. Dementsprechend werden Dünnbleche, bzw. zwei Dünnblechteile, insbesondere tiefgezogene Preßteile, vorzugsweise an zwei sich über lappenden Blechrändern miteinander verschweißt oder es werden Bördelnäh mit Stirnflächenschweißung beim Laserschweißen angewandt.

Die europäische Patentanmeldung 189 906 offenbart ein Verfahren zum Stumpfschweißen von im wesentlichen rechteckige Schnittkanten aufweisen Stahlblechen oder Stahlbändern mittels eines Laserstrahls, bei dem an den Blechen bzw. Bändern Schnittkanten mit einer Welligkeit in Längsrichtung von höchstens 0,04 mm hergestellt, die Bleche bzw. Bänder mit ihren Schnittkanten in Berührungskontakt gebracht und dann mittels eines Laserstrahles, der einen die Schnittkanten erfassenden Brennfleck von höchstens 0,2 mm hat, miteinander verschweißt werden.

Es hat sich gezeigt, daß bei ebenen Dünnblechen und insbesondere bei tiefgezogenen Preßteilen aus Dünnblech ein für das Laserschweißen ausreichend geringer Fügespalt im Stumpfstoß vielfach nicht mit ausreichender Zuverlässigkeit zu erreichen ist.

Hiervon ausgehend liegt der Erfindung die Aufgabe zugrunde, ein Verfahren und zu dessen Durchführung geeignete Vorrichtungen anzugeben, die einen äußerst geringen Fügespalt beim Stumpfstoß der Blechkanten (Blechkantenflächen) erreichen lassen, so daß das nachfolgende Laserschweißen eine einwandfreie Stumpfschweißnaht (I-Naht) ergibt.

Diese Aufgabe wird erfindungsgemäß dadurch gelöst, daß die beiden zu verschweißenden Bleche kantenfluchtend fixiert verspannt und mit einem Abstand zwischen den beiden einander gegenüberstehenden, zu verschweißenden Kanten positioniert werden, daß ein bahngeführter Laserkopf oder zwei gemeinsam bahngeführte Laserköpfe die beiden Blechkanten beschneiden, daß die beiden laserbeschnittenen Blechkanten durch Verschieben mindestens eines der fixiert verspannten Bleche auf berührenden Stoß zusammengefahren werden und daß dann ein durch die gleiche Bahnführung gesteuerter Laserkopf die beiden Blechkanten miteinander verschweißt.

Es hat sich überraschend gezeigt, daß nach einem mit den üblichen Mitteln sehr exakt durchführbaren Verspannen der zu verbindenden Blechteile in ihrer Soll-Position und dem nachfolgenden Beschneiden mittels eines Laserkopfes oder mittels zweier gemeinsam bahngesteuerter Laserköpfe sich erzielen läßt, daß die auftretenden Wellenberge und die Wellentäler an beiden Blechkanten längs der Schnittbahn einander zugeordnet sind, derart, daß sich nach dem Zusammenfahren auf Kantenstoß eine äußerst geringer Fügespalt ergibt und sich die beiden (welligen) Blechkantenflächen gegenseitig weitgehend abdecken. Wichtig ist dabei, daß die Mittel zur Bahnführung beim gleichzeitigen Schneiden beider Kanten mit zwei Laserköpfen oder bei nacheinander erfolgenden Schneiden mittels eines Laserkopfes und möglichst auch die Bahnführungsmittel beim Schweißen identisch sind. Die Blechkanten-Welligkeit in der Blechebene ist zwar gering und liegt im Bereich der Nachführgenauigkeit des Laserstrahls; sie wird aber hingenommen und bewußt zur Minimierung des Fügespaltes der beiden fluchtenden Bleche ausgenutzt.

In weiterer Ausgestaltung des erfindungsgemäßen Verfahrens kann vorgesehen sein, daß nach dem Zusammenfahren der beiden laserbeschnittenen Blechkanten auf Kantenstoß zusätzlich noch ein einmaliges Beschneiden im Fügespalt der Bleche durchgeführt und im übrigen nach Anspruch 4 verfahren wird. Diese zusätzliche Maßnahme ermöglicht es, den Fügespalt und die gegenseitige Zuordnung des Wellenverlaufs längs der beiden fluchtenden Blechkanten noch weiter zu verbessern.

Unabhängig von vorstehender Arbeitsweise kann die der Erfindung zugrunde liegende Aufgabe auch in der Weise gelöst werden, daß nachdem die beiden zu verschweißenden Bleche kantenfluchtend fixiert verspannt und ohne zwischengeschaltetes Beschneiden auf berührenden Stoß zusammengefahren sind, die beiden Blechkanten lediglich durch einmaliges Beschneiden mit einem bahngeführten Laserkopf bearbeitet werden, daß ggf. der Schnittspalt durch Verschieben mindestens eines der Bleche auf berührenden Stoß der Blechkanten verringert wird und daß dann der mit dem gleichen Führungsmittel bahngeführte Laserkopf die beiden Blechkanten miteinander verschweißt.

Insbesondere beim Stumpfschweißen von tiefgezogenen Preßteilen oder Preßteilgruppen aus dünnen Blech für Fahrzeugkarosserien ist est beson ders bedeutsam, daß die Blechteile mit sich voll abdeckenden bzw. fluchtenden Kantenflächen und geringem Fügespalt aneinanderzuliegen kommen. Dazu lehrt die Erfindung, daß die Preßteile zweckmäßig vor dem Beschneiden mittels Laserstrahl bis nach dem Schweißen mittels eines Laserstrahls auf einem ihrer Soll-Raumform entsprechenden Konturenbett kantenfluchtend fixiert zu verspannen sind.

Es kann auch vorteilhaft sein, anstatt des Beschneidens der Blechteile bzw. der Preßteile mit gegenseitig beanstandeten oder auf Stoß zusammengefahrenen Kanten, die beiden Bleche gemäß Anspruch 5 bzw. gelegentlich die beiden Preßteile nach Anspruch 7 einmalig und gemeinsam mit sich überlappenden Kantenbereichen zu beschneiden, wobei die Blech-bzw. Preßteile einen kleinen Abstand haben müssen, nach dem Beschneiden auf minimalen Fügespalt zusammengefahren und dann durch den Strhal des Laserkopfes, der die gleiche Steuerung (Kopfsteuerung) seiner Bahnführung wie beim Beschneiden hat, miteinander verschweißt werden.

Die erzeugte Laserschweißnaht fluchtet weitgehend mit den angrenzenden Flächen der beiden verbundenen Blechteile. Wegen der hohen Anforderungen an die Qualität der Blechoberfläche bei deren Verwendung im Fahrzeugkarosseriebau empfiehlt es sich, daß die Schweißnaht, jedenfalls in dem bei späterer Verwendung sichtbaren Be-reich, glättend oberflächenbearbeitet wird, insbe-sondere durch Schleifen und/oder Bürsten.

Eine zur Durchführung des erfindungsgemäßen Verfahrens geeignete Spann-und Positioniervorrichtung für ebene Bleche und für geformte Preßteile hat zweckmäßig ein Maschinenbett, in dem zwei Positionierschlitten geführt sind, sowie Auflagen und Spannmittel für die zu verschweißenden Bleche bzw. Preßteile. Positionierschlitten, wie sie im Werkzeugmaschinenbau bekannt und üblich sind, haben eine hohe Führungsgenauigkeit von mindestens 0,01 mm in allen Raumkoordinaten.

Vorzugsweise sind die beiden Positionierschlitten nur eindimensional geradlinig in Längsrichtung gegeneinander verschiebbar am Maschinenbett geführt. Beim Beschneiden der beiden Blechkanten mittels Laserstrahl sowie nach dem Zusammenfahren der beschnittenen Blechkanten auf Kantenstoß werden die beiden Positionierschlitten bevorzugt ortsfest fixiert.

Dabei sind dann der Laserkopf bzw. die Laserköpfe in den drei Raumkoordinaten x,y,z translatorisch sowie schwenkbar bahngeführt ausgebildet, wobei zumindest in den beiden Raumkoordinaten x,y eine Bahnführung mit hoher Genauigkeit erforderlich ist, beispielsweise durch Anordnung des Laserkopfes an einem Maschinenportal, das am Maschinenbett geführt ist.

Um die Bahnführung des Laserkopfes bzw. der Laserköpfe zu vereinfachen, kann es zweckmäßig sein, wenn die beiden Positioniersschlitten in drei Raumkoordinaten x,y,z eindimensional geradlinig einzeln und/oder gemeinsam am Maschinenbett verschiebbar ausgebildet und vorzugsweise bahnsteuerbar sind.

Wenn die Verschiebbarkeit der Positionierschlitten zu einer Bewegung der Blechteile während des Beschneidens und Schweißens ausgenutzt wird, dann ist es erforderlich, jeweils die gleiche Führungssteuerung anzuwenden, dahingehend, daß die den einzelnen bewegten Teilen, nämlich jedem Schlitten, bzw. dem gemeinsam bewegten Schlittenpaar, und dem Laserkopf zuge-ordneten Bahnführungsmittel von einer gemeinsa-men Zentralsteuereinheit (Kopfsteuerung) gesteuert sind.

Tiefgezogene Preßteile aus Dünnblech federn nach ihrer Verformung je nach ihrer Gestalt in unterschiedlichem Maße auf. Daher ist vorgesehen, daß an den beiden Positionierschlitten auswechselbare Konturenbetten angeordnet sind, deren Spannflächen mit der Soll-Raumform der zu verschweißenden Blechteile übereinstimmt.

Es wurde bereits erwähnt und ist bekannt, daß der Laserkopf beim Schneiden und Schweißen längs der Blechkanten bzw. der Schweißnaht, die bei Preßteilen eine Raumkurve bilden, mit hoher Nachführgenauigkeit bahngeführt auszubilden ist. Das kann bei einer Laserschneid- und Schweißeinrichtung zur Durchführung des erfindungsgemäßen Verfahrens beispielsweise durch eine Programmsteuerung geschehen, die zweckmäßig eine teach-in Steuerung aufweist.

Die geforderte hohe Nachführgenauigkeit des Laserkopfes bzw. der Laserköpfe kann aber auch dadurch erreicht werden, daß die Laser-Schneid und Schweißeinrichtung durch ein den Schneidkanten der Bleche und dem Fügespalt vorlaufendes Tastorgan, insbesondere einen induktiven Geber, bahngeführt wird.

Nachfolgend wird die Erfindung mit einem Ausführungsbeispiel anhand der Zeichnung näher erläutert.

Es zeigen:

Fig. 1 eine Spann- und Positioniervorrichtung für zwei zusammenzuschweißende, tiefgezogene Preßteile in der Arbeitsstellung "Beschneiden",

Fig. 2 die Spann- und Positioniervorrichtung nach Fig. 1 mit zwei auf Kantenstoß zusammengefahrenen Preßteilen,

Fig. 3 die Spann- und Positioniervorrichtung in der Arbeitsstellung "Schweißen" mit einem die Schweißnaht legenden Laserkopf.

Die Spann- und Positioniervorrichtung hat ein Maschinenbett 1, an dem zwei Positionierschlitten 2,3 in Längsrichtung (x-Koordinate) mit hoher Genauigkeit (Einstellfehler Δ x ≤ 0,01 mm) geführt sind. Jeder Positionierschlitten 2,3 hat eine mit ihm fest verbundene Auflage 4,5, auf der je ein Preßteil 6,7 mittels mehrerer Spannzangen 8 derart fixiert verspannt ist, daß die Preßteile 6,7 kantenfluchtend mit einem Abstand von etwa 10 bis 30 mm einander gegenüberstehen. Zu diesem Zweck sind in Nähe der Preßteilkanten 9,10 an den Auflagen 4,5 der Schlitten 2,3 auswechselbare Konturenbetten 11,12 angeordnet, deren Spannflächen mit der Soll-Raumform der zu verschweißenden Preßteile 6,7 übereinstimmt, so daß ein exaktes Fluchten der beiden später zu verschweißenden Blechkanten (ohne gegenseitigen Versatz in Richtung der Flächen-Normalen) erzielt ist.

Ein oberhalb angeordneter Laserkopf 13 zeigt einen auf eine Preßteilkante 9 gerichteten Laserstrahl 14. Die nicht dargestellte Führung des Laserkopfes 13, der z.B. an einem am Maschinenbett 1 geführten, nicht dargestellten Maschinenportal angeordnet sein kann, bewegt den Laserstrahl 14 in den drei Raumkoordinaten x,y,z und in zwei Schwenkachsen mit hoher Genauigkeit (± 0,01 mm). Meist ist die Führgenauigkeit der z-Achse weniger kritisch, weil die Größe des Laserstrahlbrennflecks, der z.B. einen Durchmesser von 0,2 mm haben kann, bei den üblichen Laseroptiken ausreichend geringfügig abstandsabhängig ist.

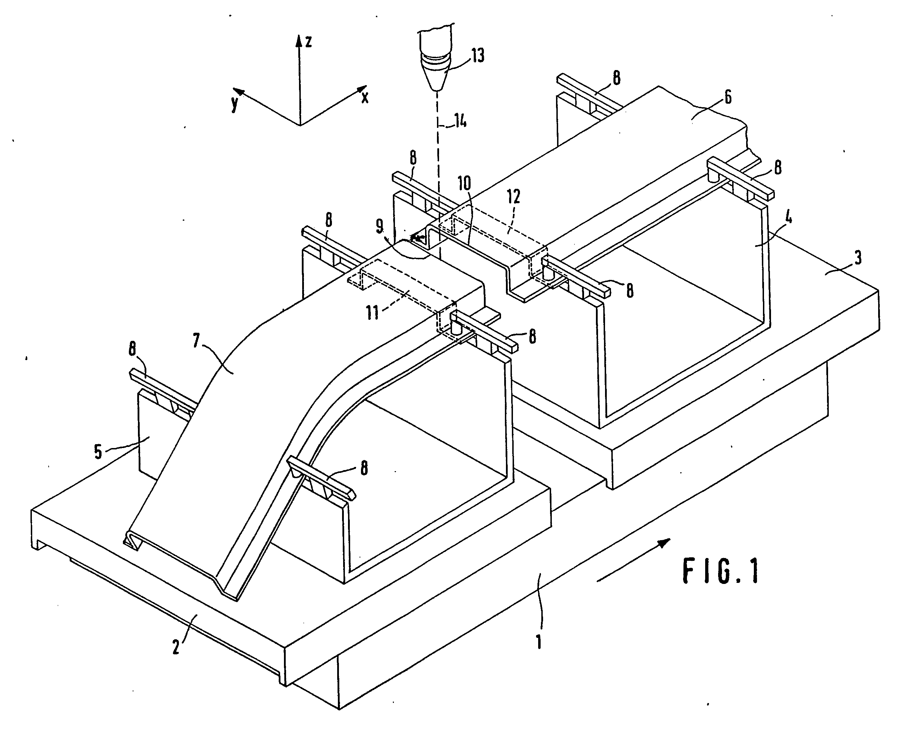

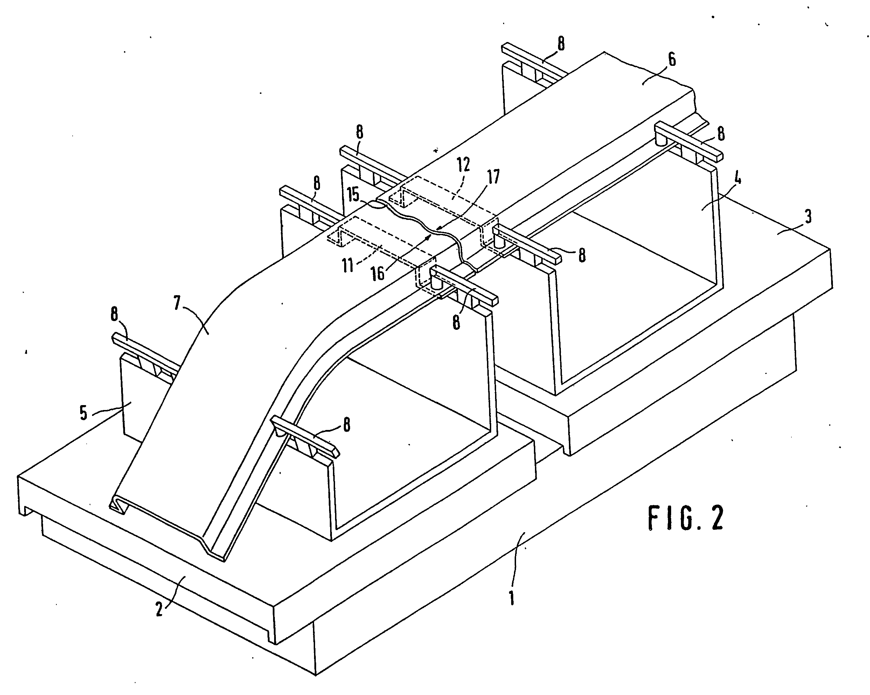

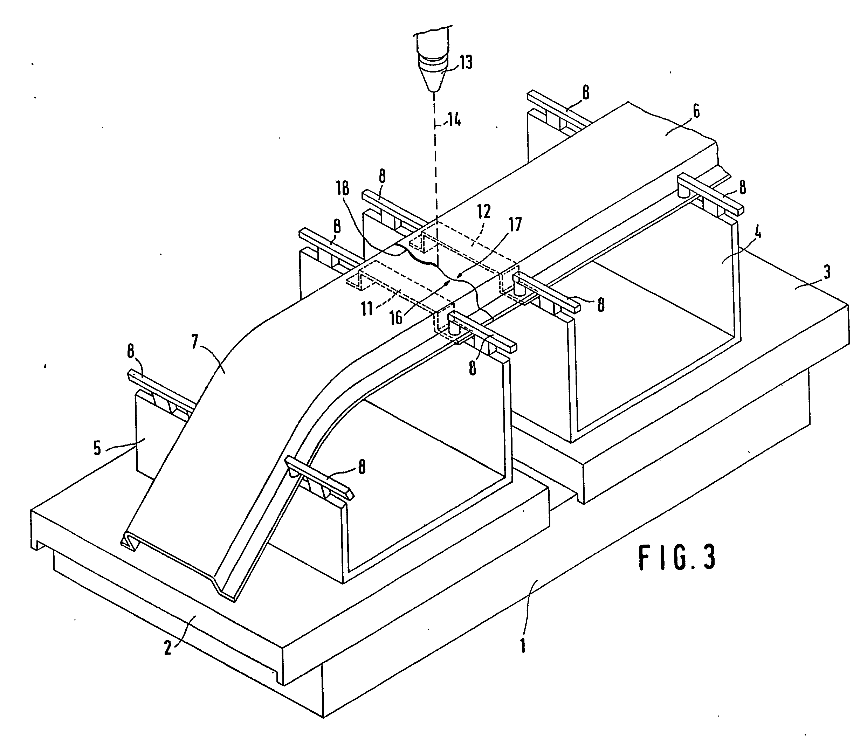

Fig. 2 zeigt gleiche Teile mit zur Fig. 1 übereinstimmenden Bezugszeichen. Die Positionierschlitten 2,3 sind nach dem Beschneiden (Fig. 1) derart in Längsrichtung (x-Koordinate) zusammengefahren worden, daß die Flächen der Preßteil-Kanten 9,10, sich gegenseitig abdeckend, auf Stoß mit möglichst geringem Fügespalt 15 - der in der Zeichnung zur Verdeutlich vergrößert dargestellt ist - stehen. Es ist ersichtlich, daß z.B. der Wellenberg 16 am Preßteil 7 in das Wellental 17 am Preßteil 6 eingreift, so daß der Fügespalt 15 minimiert ist und eine in allen Richtungen gegenseitige Abdeckung der Preßteilkantenflächen vorliegt, ohne gegenseitigen Versatz der Blechkanten in Richtung der Normalen auf die Bleche. Fig. 3 zeigt den Laserkopf 13 mit Laserstrahl 14 beim Legen der Schweißnaht 18.

Mittels der vorstehend erörterten Vorrichtungen wird das erfindungsgemäße Verfahren zweckmäßig wie folgt durchgeführt.

Die beiden zu verschweißenden Preßteile 6,7 werden auf ihren Auflagen 4,5 mit daran angeordneten Konturenbetten 11,12 kantenfluchtend fixiert verspannt und mit Hilfe der Positionierschlitten 2,3 mit einem gegenseitigen Abstand von etwa 10 bis 30 mm ortsfest positioniert. Der bahnführte Laserkopf 13 mit Laserstrahl 14 beschneidet nacheinander die beiden Preßteil-Kanten 9,10. Alsdann werden die Preßteile 6,7 mittels der Positionierschlitten 2,3 auf Stoß zusammengefahren und die Schlitten wieder fixiert.

Wenn ein optimal schmaler Fügespalt über die ganze Länge der beiden Preßteil-Kanten 9,10 noch nicht erreicht ist, kann noch ein einmaliges Beschneiden der Blechkanten längs des vorhandenen Fügespaltes 15 durchgeführt werden.

Die Erfindung kann auch in der Weise durchgeführt werden, daß auf das Beschneiden der beiden Preßteil-Kanten 9,10 mit gegenseitiger Abstandslage (Fig. 1) verzichtet wird, derart, daß die beiden Preßteile 6,7 nach ihrem kantenfluchtend fixierten Verspannen unmittelbar auf Stoß zusammengefahren werden und in dieser Arbeitslage nur einmalig mittels des Laserkopfes 13 mit Laserstrahl 14 beschnitten werden und ggf. der Schnittspalt durch Verschieben mindestens eines der Schlitten 2,3 auf optimalen Fügespalt 15 verringert wird.

Nachdem der optimale Fügespalt 15 erreicht ist, werden die Blechkanten (9,10) miteinander verschweißt mittels des Laserstrahls (14) des Laserkofes (13), der mit der gleichen Bahnführung wie beim Blechschneiden gesteuert.

Laserstrahlerzeuger mit hoher Leistung zum Schneiden und Schweißen von Stahlteilen sind bekannt, wobei sich hohe Schnitt- und Schweißgeschwindigkeiten erreichen lassen. Die Bearbeitungsgeschwindigkeiten sind bei vorgegebener Laserleistung von der Blechdicke abhängig. Bei dem erörterten Ausführungsbeispiel wurde beispielhaft mit einer Fahrgeschwindigkeit des Laserkopfes von 2 m/sec bei einer Blechdicke von 0,8 mm und einem Brennfleckdurchmesser von 0,2 mm gearbeitet, wobei die Streckenenergie beim Schweißen im Bereich von 400 J/cm lag.

Entsprechend dem vorstehenden Ausführungsbeispiel können auch ebene Blechplatten zweck Vergrößerung ihrer Gesamtfläche mittels eines energiereichen Laserstrahls miteinander im Stumpfstoß (I-Naht) verschweißt werden. Dabei können die beiden ebenen Tischflächen der Positionierschlitten 2,3 oder eine entsprechend eben ausgebildete Auflage an den Schlitten als Träger für die Bleche dienen. Dreidimensionale Konturenbetten sind dann nicht erforderlich, sondern es empfiehlt sich ein geeignetes Führungsmittel für die Positionierschlitten vorzusehen, um zu vermeiden, daß die einander gegenüberstehenden dünnen Blechkanten beim Zusammenfahren auf Stoß in eine kantenüberlappende Lage gelangen können.

Wenn die am Maschinenbett (1) angeordneten Positionierschlitten (2,3) mindestens in der x-Richtung und der z-Richtung verschiebbar sind, können die ebenen Bleche auch mit einem Abstand (z-Achse) von 0,2 mm bis 0,5 mm und sich kantenüberlappend (x-Achse) zusammengefahren, dann gleichzeitig beschnitten und nach einem Zusammenfahren in z-Richtung und x-Richtung auf einen minimalen, kantenfluchtenden Fügespalt, in dem die Wellenberge und -täler beider Blechteile ineinander eingreifen, im Fügespalt miteinander verschweißt werden. Der gegenseitige Abstand der beiden Bleche in z-Richtung gewährleistet, daß beim gleichzeitigen Beschneiden der Bleche diese nicht miteinander teilweise verschweißen.

## BEZUGSZEICHENLISTE

1 Maschinenbett
2 Positionierschlitten
3 Positionierschlitten
4 Auflage
5 Auflage
6 Preßteil
7 Preßteil
8 Spannzange
9 Preßteilkante (Blechkante)
10 Preßteilkante (Blechkante)
11 Konturenbett
12 Konturenbett
13 Laserkopf
14 Laserstrahl
15 Fügespalt
16 Wellenberg
17 Wellental
18 Schweißnaht

## Ansprüche

1. Verfahren zum Stumpfschweißen von Dünnblechen, insbesondere aus Stahl, mittels eines energiereichen Laserstrahles dadurch gekennzeichnet, daß die beiden zu verschweißenden Bleche kantenfluchtend fixiert verspannt und mit einem Abstand zwischen den beiden einander gegenüberstehenden, zu verschweißenden Kanten (9,10) positioniert werden, daß ein bahngeführter Laserkopf (13) oder zwei gemeinsam bahngeführte Laserköpfe die beiden Blechkanten (9,10) beschneiden, daß die beiden laserbeschnittenen Blechkanten durch Verschieben mindestens eines der fixiert verspannten Bleche auf berührenden Stoß zusammengefahren werden und daß dann ein durch die gleiche Bahnführung gesteuerter Laserkopf (9) die beiden Blechkanten (9,10) miteinander verschweißt.

2. Verfahren nach Anspruch 1, dadurch gekennzeichnet, daß ein Laserkopf (9) die beiden zueinander mit Abstand fluchtend gegenüberstehenden Blechkanten (9,10) nacheinander beschneidet.

3. Verfahren nach Anspruch 1 oder 2, dadurch gekennzeichnet, daß beim Beschneiden die beiden einander gegenüberstehenden Blechkanten (9, 10) mit einem gegenseitigen Abstand im Bereich von 10 mm bis 30 mm positioniert sind.

4. Verfahren zum Stumpfschweißen von Dünnblechen, insbesondere aus Stahl, mittels eines energiereichen Laserstrahles, bei dem die beiden zu verschweißenden Bleche kantenfluchtend fixiert verspannt und die beiden Blechkanten auf berührenden Stoß zusammengefahren sind, insbesondere nach Anspruch 1, dadurch gekennzeichnet, daß die beiden Blechkanten (9,10) an ihrem Fügespalt (15) durch einmaliges Beschneiden mit einem bahngeführten Laserkopf (9) bearbeitet werden, daß ggf. der Schnittspalt durch Verschieben mindestens eines der Bleche auf berührenden Stoß der Blechkanten (9,10) verringert wird und daß dann der mit dem gleichen Führungsmittel bahngesteuerte Laserkopf (9) die beiden Blechkanten (9,10) miteinander verschweißt.

5. Verfahren zum Stumpfschweißen von Dünnblechen, insbesondere aus Stahl, mittels eines energiereichen Laserstrahls, bei dem die beiden zu verschweißenden Bleche fixiert verspannt sind, dadurch gekennzeichnet daß die beiden Bleche sich im Bereich ihrer Kanten gegenseitig überlappen mit einem Abstand der Bleche im Überlappungsbereich von mindestens 0,2 mm, vorzugsweise 0,3 bis 0,5 mm, daß die beiden Bleche durch den Laserstrahl eines bahngeführten Laserkopfes (13) gleichzeitig beschnitten und dann auf berührenden, kantenfluchtenden Stoß ihrer Schnittkantenflächen zusammengefahren werden und daß dann der mit dem gleichen Führungsmittel bahngesteuerte Laserkopf (9) die beiden Blechkanten (9,10) miteinander verschweißt.

6. Verfahren zum Stumpfschweißen von tiefgezogenen Preßteilen oder Preßteilgruppen für Fahrzeugkarosserien, nach einem oder mehreren der Ansprüche 1 bis 4, dadurch gekennzeichnet, daß die Preßteile (6,7) vor dem Beschneiden bis nach dem Schweißen auf je einem ihrer Soll-Raumform entsprechenden Konturenbett (11;12) kantenfluchtend fixiert verspannt werden.

7. Verfahren nach Anspruch 5 zum Stumpfschweißen von tiefgezogenen Preßteilen oder Preßteilgruppen für Fahrzeugkarosserien, dadurch gekennzeichnet, daß beim gleichzeitigen Beschneiden ein Preßteil (6) auf einem Konturenbett (11) anliegend verspannt und das andere Preßteil (7) auf einem Konturenbett (12) mit einem Abstand von 0,2 bis 0,5 mm und den Randbereich der Kante des ersten Preßteils (6) überlappend verspannt ist, und daß nach dem Beschneiden das andere Preßteil (7) auf dem Konturenbett (12) anliegend verspannt wird.

8. Verfahren nach einem oder mehreren der Ansprüche 1 bis 7, dadurch gekennzeichnet, daß die Schweißnaht (18) der beiden Blech- bzw. Preßteile (6,7) glättend oberflächenbearbeitet wird, insbesondere durch Schleifen und/oder Bürsten.

9. Spann- und Positioniervorrichtung zur Durchführung des Verfahrens nach den Ansprüchen 1 bis 7, gekennzeichnet durch ein Maschinenbett (1), in dem zwei Positionierschlitten (2,3) geführt sind, und durch Auflagen (4,5) sowie Spannmittel (8) für die zu verschweißenden ebenen Dünnbleche bzw. Preßteile (6,7).

10. Vorrichtung nach Anspruch 7, dadurch gekennzeichnet, daß die beiden Positionierschlitten (2,3) in Längsrichtung (x-Koordinate) geradlinig gegeneinander verschiebbar am Maschinenbett (1) geführt sind.

11. Vorrichtung nach Anspruch 7, insbesondere zur Durchführung des Verfahrens nach Anspruch 5, dadurch gekennzeichnet, daß die beiden Positionierschlitten (2,3) in den drei Raumkoordinaten x,y,z geradlinig einzeln und/oder gemeinsam im Maschinenbett (1) verschiebbar und vorzugsweise bahnsteuerbar sind.

12. Vorrichtung nach einem oder mehreren der Ansprüche 7 bis 9, gekennzeichnet durch an je einer Auflage (4,5) an beiden Schlitten (2,3) auswechselbar angeordnete Konturenbetten (11,12), deren Spannfläche mit der Soll-Raumform der zu verschweißenden Preßteile (6,7) übereinstimmt.

13. Vorrichtung zur Durchführung des Verfahrens nach einem oder mehreren der Ansprüche 1 bis 6, dadurch gekennzeichnet, daß die Laser-Schneid- und Schweißeinrichtung eine teach-in Steuerung aufweist.

14. Vorrichtung zur Durchführung des Verfahrens nach einem oder mehreren der Ansprüche 1 bis 6, dadurch gekennzeichnet, daß die Laser-Schneid- und Schweißeinrichtung durch ein die Kanten (9,10) der Bleche bzw. Preßteile (6,7) und den Fügespalt (15) vorlaufend abtastendes Tastorgan, insbesondere ein induktiver Geber, geführt wird.

FIG.1

FIG.2

FIG.3

| | **EINSCHLÄGIGE DOKUMENTE** | | EP 89101561.2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | <u>DE - B1 - 2 949 095</u> (MASCHINEN-FABRIK WEINGARTEN AG) <br> * Claims * | 1 | B 23 K 26/00 |
| A | -- | 2,4,6 | |
| A | <u>US - A - 4 626 651</u> (TANIGUCHI) <br> * Abstract * <br> -- | 1-4 | |
| A | <u>US - A - 4 687 901</u> (BINDER) <br> * Totality * <br> -- | 1,10,11 | |
| A | PATENT ABSTRACTS OF JAPAN, unexa-mined applications, M Sektion, Band 5, Nr. 131, 21. August 1981 <br><br> THE PATENT OFFICE JAPANESE GOVERNMENT <br> Seite 5 M 84 <br><br> * Kokai-Nr. 56-66 396 (HONDA) * <br> ---- | 1 | RECHERCHIERTE SACHGEBIETE (Int. Cl.4) <br><br> B 23 K 26/00 <br> B 23 K 28/00 <br> B 21 D 43/00 |

Der vorliegende Recherchenbericht wurde für alle Patentansprüche erstellt.

| Recherchenort | Abschlußdatum der Recherche | Prüfer |
|---|---|---|
| WIEN | 10-04-1989 | BENCZE |